(19) **Europäisches Patentamt / European Patent Office / Office européen des brevets**

(11) **EP 3 351 650 B1**

(12) **EUROPEAN PATENT SPECIFICATION**

(45) Date of publication and mention of the grant of the patent:
**19.05.2021 Bulletin 2021/20**

(21) Application number: **16845973.3**

(22) Date of filing: **16.09.2016**

(51) Int Cl.:
*C22C 38/00* (2006.01)    *C21D 6/00* (2006.01)
*C21D 8/02* (2006.01)    *C22C 38/12* (2006.01)
*C22C 38/58* (2006.01)    *C21D 9/00* (2006.01)
*C22C 38/02* (2006.01)    *C22C 38/04* (2006.01)
*C22C 38/06* (2006.01)    *C22C 38/14* (2006.01)
*C22C 38/22* (2006.01)    *C22C 38/24* (2006.01)
*C22C 38/44* (2006.01)    *C22C 38/46* (2006.01)
*C22C 38/26* (2006.01)    *C22C 38/28* (2006.01)
*C22C 38/32* (2006.01)    *C22C 38/42* (2006.01)

(86) International application number:
**PCT/JP2016/004256**

(87) International publication number:
**WO 2017/047099 (23.03.2017 Gazette 2017/12)**

(54) **STEEL STRUCTURE FOR HYDROGEN GAS WITH EXCELLENT HYDROGEN EMBRITTLEMENT RESISTANCE IN HIGH PRESSURE HYDROGEN GAS AND METHOD OF PRODUCING THE SAME**

STAHLSTRUKTUR FÜR WASSERSTOFFGAS MIT AUSGEZEICHNETER WASSERSTOFF-VERSPRÖDUNGSBESTÄNDIGKEIT IN HOCHDRUCK-WASSERSTOFFGAS UND VERFAHREN ZUR HERSTELLUNG DES GLEICHEN

STRUCTURE EN ACIER POUR GAZ HYDROGÈNE AVEC UNE EXCELLENTE RÉSISTANCE À L'EMBLÉMENT D'HYDROGÈNE DANS UN GAZ HYDROGÈNE À HAUTE PRESSION ET PROCÉDÉ DE PRODUCTION DU MÊME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2015 JP 2015184334**

(43) Date of publication of application:
**25.07.2018 Bulletin 2018/30**

(73) Proprietor: **JFE Steel Corporation**
**Tokyo 100-0011 (JP)**

(72) Inventors:
• **NAGAO, Akihide**
  **Tokyo 100-0011 (JP)**
• **TAKAGI, Shusaku**
  **Tokyo 100-0011 (JP)**

(74) Representative: **Haseltine Lake Kempner LLP**
**Bürkleinstrasse 10**
**80538 München (DE)**

(56) References cited:
| | |
|---|---|
| EP-B1- 1 546 417 | JP-A- 2014 173 160 |
| JP-A- 2014 173 160 | JP-A- 2014 194 042 |
| JP-B1- S 507 528 | JP-B1- 5 633 664 |
| JP-B1- 5 633 664 | US-A- 4 354 882 |
| US-A- 4 394 189 | US-A1- 2005 167 013 |
| US-A1- 2009 285 713 | US-A1- 2010 212 785 |
| US-A1- 2014 246 131 | |

• SATOSHI MARUTA ET AL.: 'Effect of Small Addition of V and Mo on Fatigue Crack Growth Behavior of Carbon Steel in Hydrogen Gas' THE JAPAN SOCIETY OF MECHANICAL ENGINEERS M&M ZAIRYO RIKIGAKU CONFERENCE 2011, page OS2211, XP009505538

**Description**

TECHNICAL FIELD

This disclosure relates to a steel structure for hydrogen gas such as a hydrogen storage vessel or a hydrogen line pipe that has excellent hydrogen embrittlement resistance in high pressure hydrogen environment and to a method of producing the steel structure for hydrogen gas.

BACKGROUND

In recent years, hydrogen has gained much attention worldwide as a renewable energy source and from the perspective of diversification of energy sources. In particular, fuel cell vehicles that use high pressure hydrogen gas as a fuel source are highly expected, and studies on the development of fuel cell vehicles have been carried out all over the world. Some fuel cell vehicles have been put into tests for practical use.

Since fuel cell vehicles run on hydrogen stored in a tank rather than on gasoline, hydrogen stations that refuel on behalf of gas stations are essential for the spread of fuel cell vehicles. At a hydrogen station, hydrogen is charged from a hydrogen storage vessel in which hydrogen is stored at high pressure to an onboard hydrogen fuel tank. The maximum filling pressure to an onboard hydrogen tank is 35 MPa currently. However, the maximum filling pressure is desirably 70 MPa in order to achieve a cruising distance comparable to that of gasoline-powered vehicles. Additionally, it is required that hydrogen shall be safely stored and supplied in such a high pressure hydrogen environment.

Therefore, although the pressure of a hydrogen storage vessel in a hydrogen station is currently 40 MPa, the pressure is required to reach 80 MPa when the maximum filling pressure is as high as 70 MPa. That is to say, hydrogen storage vessels in hydrogen stations are exposed to an environment where the pressure is 80 MPa.

On the other hand, it is known that low-alloy steel embrittles when hydrogen enters into low-alloy steel. Some kinds of low-alloy steel that have a sufficient thickness can be used when the hydrogen pressure is no more than about 15 MPa. However, when the pressure exceeds 15 MPa, the risk of occurrence of hydrogen embtittlement fracture during the usage increases, and therefore austenitic stainless steel such as SUS316L steel, in which hydrogen embrittlement is less likely to occur than in low-alloy steel, is used rather than low-alloy steel.

However, steel materials such as SUS316L steel are expensive, and the thickness thereof should be extremely thick in order to resist a hydrogen pressure of 80MPa because such steel materials have a low strength. As a result, the price of the hydrogen storage vessel is very high. Therefore, it is desirable to develop a hydrogen storage vessel for hydrogen stations that can resist a pressure of 80 MPa with lower costs.

Various techniques have been investigated on resolving the above problems and applying low-alloy steel to high pressure hydrogen storage vessels.

For example, JP 2005-2386 A (PTL 1) describes a kind of steel for high pressure hydrogen environment where MnS-based or Ca-based inclusion or VC is used as a hydrogen trapping site in steel to produce non-diffusible hydrogen and thereby embrittlement caused by diffusible hydrogen is suppressed.

JP 2009-46737 A and JP 2009-275249 A (PTLs 2 and 3) describe a kind of low-alloy high-tensile strength steel having excellent embrittlement resistance in high pressure hydrogen environment whose tensile strength is suppressed to a very narrow range of 900 MPa to 950 MPa by performing a tempering treatment at a relatively high temperature during quenching and tempering of Cr-Mo steel.

JP 2009-74122 A (PTL 4) describes a kind of low-alloy steel for high-pressure gaseous hydrogen environment where V-Mo based carbide is utilized to enhance tempering temperature and thereby embrittlement resistance in hydrogen environment is improved.

JP 2010-37655 A (PTL 5) describes a kind of steel for high pressure hydrogen storage vessel having excellent hydrogen resistance where a large amount of (Mo,V)C is precipitated by adding a large amount of Mo and V and performing stress-relief annealing for a long time after normalizing treatment during the producing of the steel sheet.

JP 2012-107332 A (PTL 6) describes a technique for suppressing hydrogen embrittlement. Specifically, the technique refines cementite to reduce the amount of entered hydrogen and thereby improves toughness of base metal. As a result, hydrogen embrittlement is suppressed.

JP 2012-107333 A (PTL 7) describes a technique for suppressing hydrogen embrittlement. Specifically, the technique controls formation of coarse cementite and martensite austenite constituent to suppress hydrogen entry and ductility deterioration. As a result, hydrogen embrittlement is suppressed.

Additionally, fatigue crack propagation characteristics of ordinary low-alloy steel are described in Yoru WADA, "Journal of the Hydrogen Energy Systems Society of Japan", Vol. 35, No. 4 (2010), pp. 38-44 (NPL 1), Taisuke MIYAMOTO et al., "Transactions of The Japan Society of Mechanical Engineers (Series A)", Vol. 78, No. 788 (2012), pp. 531-546 (NPL 2), etc.

US 4 354 882 A describes a high performance carbon steel tubular for critical Oil Country applications and a process for its preparation.

US 2010/212785 A1 describes a low cost low-alloy steel having a high strength and excellent high-pressure hydrogen environment embrittlement resistance characteristics under a high-pressure hydrogen environment.

CITATION LIST

Patent Literature

PTL 1: JP 2005-2386 A
PTL 2: JP 2009-46737 A
PTL 3: JP 2009-275249 A
PTL 4: JP 2009-74122 A
PTL 5: JP 2010-37655 A
PTL 6: JP 2012-107332 A
PTL 7: JP 2012-107333 A

Non-patent Literature

NPL 1: Yoru WADA, "Journal of the Hydrogen Energy Systems Society of Japan", Vol. 35, No. 4 (2010), pp. 38-44
NPL 2: Taisuke MIYAMOTO et al., "Transactions of The Japan Society of Mechanical Engineers (Series A)", Vol. 78, No. 788 (2012), pp. 531-546

SUMMARY

(Technical Problem)

Particularly for hydrogen storage vessels used in high pressure hydrogen environment, it was difficult to secure a long-term service life because cyclic stress was applied to the vessels due to repeated hydrogen filling. Reducing fatigue crack propagation rate is important for prolonging the service life.

However, the above-mentioned conventional techniques could not sufficiently lower the fatigue crack propagation rate.

Additionally, it is considered that in the future, even a steel structure for hydrogen gas such as a hydrogen line pipe used in a hydrogen pipeline, which currently does not need to work in a high pressure hydrogen environment as with the hydrogen storage vessel, will be required to secure the same level of safety as the hydrogen storage vessel.

The present disclosure has been contrived in view of the situation described above and an object thereof is to provide a steel structure for hydrogen gas such as a hydrogen storage vessel or a hydrogen line pipe which realizes excellent hydrogen embrittlement resistance by achieving a lower fatigue crack propagation rate in high pressure hydrogen environment as compared with conventional steel, and an advantageous method of producing the steel structure for hydrogen gas.

(Solution to Problem)

In order to achieve the above object, we carefully investigated the hydrogen embrittlement resistance of steel structures for hydrogen gas with various microstructures in high pressure hydrogen gas. As a result, we discovered the following.

By

(1) optimizing addition amounts of V and Mo and a ratio of number of V atoms to number of Mo atoms, or
(2) optimizing addition amounts of Ti and Mo and a ratio of number of Ti atoms to number of Mo atoms,

it is possible to achieve an improved hydrogen embrittlement resistance in high pressure hydrogen gas as compared with conventional materials, and thereby a steel structure for hydrogen gas such as a hydrogen storage vessel or a hydrogen line pipe with excellent hydrogen embrittlement resistance can be obtained.

The present disclosure is based on the aforementioned discoveries and further studies.

The invention is defined by the claims.

(Advantageous Effect)

According to the present disclosure, it is possible to obtain a steel structure for hydrogen gas such as a hydrogen storage vessel or a hydrogen line pipe that has extremely excellent hydrogen embrittlement resistance in high pressure hydrogen gas as compared with conventional ones. Therefore, the present disclosure is extremely useful in industrial terms.

DETAILED DESCRIPTION

The present disclosure will be specifically described below.

The steel structure for hydrogen gas of the present disclosure can be obtained by containing, by mass%, V: 0.05 % to 0.30 % and Mo: 0.05 % to 1.13 % where a ratio of number of V atoms to number of Mo atoms is in a range of 0.6 to 2.0 and setting a tempering temperature during quenching and tempering to 600 °C or higher and $Ac_1$ transformation temperature or lower, or containing, by mass%, Ti: 0.02 % to 0.12 % and Mo: 0.02 % to 0.48 % where a ratio of number of Ti atoms to number of Mo atoms is in a range of 0.5 to 2.0 and setting a tempering temperature during quenching and tempering to 600 °C or higher and $Ac_1$ transformation temperature or lower, and finely precipitating complex carbides of V and Mo or complex carbides of Ti and Mo whose average particle size are in a range of 1 nm to 20 nm.

Because of a quenching and tempering treatment as described above, fine precipitates of complex carbides of V and Mo mainly composed of (V, Mo)C are formed in a case of adding V and Mo, and fine precipitates of complex carbides of Ti and Mo mainly composed of (Ti, Mo)C are formed in a case of adding Ti and Mo.

Thus, by optimizing addition amounts of V and Mo and a ratio of number of V atoms to number of Mo atoms, or optimizing addition amounts of Ti and Mo and a ratio of number of Ti atoms to number of Mo atoms, fine precipitates that effectively trap hydrogen are dispersed. As a result, the steel structure is able to achieve an improved hydrogen embrittlement resistance in high pressure hydrogen gas as compared with conventional materials and to exhibit an excellent hydrogen embrittlement resistance.

Such a hydrogen trapping effect caused by fine precipitates is more effective as the ratio of number of V atoms to number of Mo atoms or the ratio of number of Ti atoms to number of Mo atoms is closer to 1. The ratio of number of V atoms to number of Mo atoms or the ratio of number of Ti atoms to number of Mo atoms is preferably 0.75 or more. The ratio of number of V atoms to number of Mo atoms or the ratio of number of Ti atoms to number of Mo atoms is preferably 1.75 or less. The ratio of number of V atoms to number of Mo atoms or the ratio of number of Ti atoms to number of Mo atoms is more preferably 0.9 or more. The ratio of number of V atoms to number of Mo atoms or the ratio of number of Ti atoms to number of Mo atoms is more preferably 1.1 or less.

Additionally, size and number density of the fine precipitates are also important factors for hydrogen embrittlement resistance. That is, the fine precipitates are required to have an average particle size of 1 nm to 20 nm. The average particle size is preferably 1 nm to 10 nm. The average particle size is more preferably 1 nm to 5 nm. When the average particle size of the fine precipitates is less than 1 nm, the interface area between the precipitates and matrix phase is small, which reduces the hydrogen trapping effect. On the other hand, when the average particle size of the fine precipitates exceeds 20 nm, the consistency of the fine precipitate with matrix phase is lost and inconsistent precipitation occurs, which also reduces the hydrogen trapping effect.

With respect to the number density of the fine precipitates, an extracted replica under TEM observation preferably has a number density of $50/100\ \mu m^2$ or more by which a high hydrogen trapping effect can be obtained. The number density is preferably $50/10\ \mu m^2$ or more. The number density is more preferably $50/\mu m^2$ or more.

In order to form such fine precipitates, a quenching and tempering process is indispensable. Additionally, the desired fine precipitates cannot be obtained unless the tempering temperature is 600 °C or higher and $Ac_1$ transformation temperature or lower.

In the above-mentioned NPL 2, although V and Mo are within the specified range of the present disclosure where the addition amounts of V and Mo are 0.25 mass% and 0.45 mass% respectively and the ratio of number of V atoms to number of Mo atoms is 1.0, it is unknown whether or not fine precipitates that trap hydrogen are formed with an appropriate size or number density because NPL 2 does not describe tempering conditions. Additionally, the S content is as high as 0.016 mass% in NPL 2. Segregation of S into prior austenite grain boundary weakens the bond strength of grain boundary, and therefore the effect of suppressing hydrogen embrittlement through hydrogen trapping is considered to be small.

The steel structure for hydrogen gas having excellent hydrogen embrittlement resistance in high pressure hydrogen gas means a steel structure for hydrogen gas whose reduction of area in hydrogen gas is not greatly decreased compared with its reduction of area in the atmosphere in a Slow Strain Rate Test (SSRT) which will be described later. Examples of representative structures include a hydrogen line pipe and a hydrogen storage vessel.

The hydrogen line pipe, which is a steel structure for hydrogen gas of the present disclosure, is a seamless steel line pipe or a UOE steel line pipe, and the hydrogen pressure is 5 MPa or more.

Additionally, the hydrogen storage vessel, which is a steel structure for hydrogen gas of the present disclosure, is a storage vessel used in a hydrogen station or the like as described above. For example, it can be a hydrogen storage vessel using only Type-1 steel material or a hydrogen storage vessel where Carbon Fiber Reinforced Plastic (CFRP) is wound around Type-2 and Type-3 steel materials. The "Type-1", "Type-2" and "Type-3" here are the classification of vessel structure described in standards pertaining to compressed natural gas vehicle fuel containers, ISO 11439, ANSI/NGV, Container Safety Rules-Exemplified Standard-Appendix-9 of High Pressure Gas Safety Act, etc. The pressure of stored hydrogen is about 35 MPa or about 70 MPa.

Next, the reasons why the steel composition of the presently disclosed steel structure for hydrogen gas is limited to the above-mentioned range will be explained. In the following description, "%" regarding the chemical composition denotes "mass%" unless otherwise noted.

C: 0.02 % to 0.50 %

C is contained for ensuring appropriate hardenability, yet such an effect is insufficient if the C content is less than 0.02 %. On the other hand, when the C content exceeds 0.50 %, not only does toughness of base metal and heat-affected zone decrease but weldability significantly deteriorates. Therefore, the C content is limited to a range of 0.02 % to 0.50 %.

Si: 0.05 % to 0.50 %

Si is contained as a deoxidizer at the steelmaking stage and as an element for ensuring hardenability, yet such effects are insufficient if the Si content is less than 0.05 %. On the other hand, when the Si content exceeds 0.50 %, grain boundary embrittles and low-temperature toughness deteriorates. Therefore, the Si content is limited to a range of 0.05 % to 0.50 %.

Mn: 0.5 % to 2.0 %

Mn is contained as an element that ensures hardenability, yet such an effect is insufficient if the Mn content is less than 0.5 %. On the other hand, when the Mn content exceeds 2.0 %, grain boundary strength lowers and low-temperature toughness deteriorates. Therefore, the Mn content is limited to a range of 0.5 % to 2.0 %.

P: 0.05 % or less

P is an impurity element and tends to segregate at grain boundaries. When the P content exceeds 0.05 %, grain boundary strength between adjacent grains lowers and low-temperature toughness deteriorates. Therefore, the P content is limited to 0.05 % or less.

S: 0.01 % or less

S is an impurity element. Additionally, S tends to segregate at grain boundaries and produce MnS which is a non-metal inclusion. Particularly, when the S content exceeds 0.01 %, grain boundary strength between adjacent grains lowers and amount of inclusions increases, leading to deterioration of low-temperature toughness. Therefore, the S content is limited to 0.01 % or less.

Al: 0.01 % to 0.10 %

A1 is useful as a deoxidizer. Additionally, Al forms fine precipitates of Al-based nitrides, which pin austenite grains upon heating and thereby suppress coarsening of grains. However, such effects are insufficient when the Al content is less than 0.01 %. On the other hand, when the Al content exceeds 0.10 %, steel sheet is likely to have surface defects. Therefore, the Al content is limited to a range of 0.01 % to 0.10 %.

N: 0.0005 % to 0.008 %

N is added because it forms nitrides with Nb, Ti, Al and the like to form fine precipitates, which has an effect of suppressing coarsening of grains and improving low-temperature toughness by pinning austenite grains upon heating. However, when the addition amount is less than 0.0005 %, the effect of refining microstructure is insufficient. On the other hand, when the addition amount exceeds 0.008 %, amount of solute N increases, and accordingly toughness of base metal and heat-affected zone is impaired. Therefore, the N content is limited to a range of 0.0005 % to 0.008 %.

O: 0.01 % or less

O forms oxides with Al and the like, which adversely affects workability of the material. Particularly when the O content exceeds 0.01 %, inclusions increase and workability impairs. Therefore, the O content is suppressed to 0.01 % or less.

In the present disclosure, the basic components include V and Mo where V: 0.05 % to 0.30 %, Mo: 0.05 % to 1.13 %, and a ratio of number of V atoms to number of Mo atoms is in a range of 0.6 to 2.0, or include Ti and Mo where, by mass%, Ti: 0.02 % to 0.12 %, Mo: 0.02 % to 0.48 %, and a ratio of number of Ti atoms to number of Mo atoms is in a range of 0.5 to 2.0. V: 0.05 % to 0.30 % and Mo: 0.05 % to 1.13 % where a ratio of number of V atoms to number of Mo atoms is in a range of 0.6 to 2.0

V and Mo form fine precipitates effective for trapping hydrogen, which improves hydrogen embrittlement resistance in high pressure hydrogen gas. As a result, excellent hydrogen embrittlement resistance can be obtained.

Therefore, it is essential to control V content to 0.05 % to 0.30 %, Mo content to 0.05 % to 1.13 %, and a ratio of number of V atoms to number of Mo atoms to a range of 0.6 to 2.0. When the amounts of V and Mo are less than the lower limits, the production amount of fine precipitates that trap hydrogen is small, and the effect of suppressing hydrogen embrittlement is insufficient. On the other hand, when the amounts exceed the upper limits, problems other than hydrogen embrittlement such as deterioration to low-temperature toughness are caused. Additionally, when the ratio of number of V atoms to number of Mo atoms is less than 0.6, expensive Mo is excessive, leading to an unnecessarily high production cost. On the other hand, when the ratio of number of V atoms to number of Mo atoms exceeds 2.0, expensive V is excessive, which is disadvantageous in terms of production cost.

Ti: 0.02 % to 0.12 % and Mo: 0.02 % to 0.48 % where a ratio of number of Ti atoms to number of Mo atoms is in a range of 0.5 to 2.0

Ti and Mo form fine precipitates effective for trapping hydrogen, which improves hydrogen embrittlement resistance in high pressure hydrogen gas. As a result, excellent hydrogen embrittlement resistance can be obtained.

Therefore, it is essential to control Ti content to 0.02 % to 0.12 %, Mo content to 0.02 to 0.48 %, and a ratio of number of Ti atoms to number of Mo atoms to a range of 0.5 to 2.0. When the amounts of Ti and Mo are less than the lower limits, the production amount of fine precipitates that trap hydrogen is small, and the effect of suppressing hydrogen embrittlement is insufficient. On the other hand, when the amounts exceed the upper limits, problems other than hydrogen embrittlement such as deterioration to low-temperature toughness are caused. Additionally, when the ratio of number of Ti atoms to number of Mo atoms is less than 0.5, expensive Mo is excessive, leading to an unnecessarily high production cost. On the other hand, when the ratio of number of Ti atoms to number of Mo atoms exceeds 2.0, expensive Ti is excessive, which is disadvantageous in terms of production cost.

In the present disclosure, the balance of the above-described chemical composition consists of Fe and inevitable impurities. However, it is possible to further appropriately contain the elements described below according to desired properties:

at least one selected from Cu: 0.05 % to 1.0 %, Ni: 0.05 % to 12.0 %, Cr: 0.1 % to 2.5 %, Nb: 0.005 % to 0.1 %, W: 0.05 % to 2.0 %, and B: 0.0005 % to 0.005 %.

Cu: 0.05 % to 1.0 %

Cu has an effect of improving hardenability. However, when the Cu content is less than 0.05 %, the effect is insufficient. On the other hand, when the Cu content exceeds 1.0 %, cracking is likely to occur during hot working when billet is being heated or welded. Therefore, when contained, the C content is in a range of 0.05 % to 1.0 %.

Ni: 0.05 % to 12.0 %

Ni improves not only hardenability as with Cu but also toughness. However, such effects are insufficient when the Ni content is less than 0.05 %. On the other hand, when the Ni content exceeds 12.0 %, hydrogen embrittlement resistance deteriorates. Therefore, when contained, the Ni content is in a range of 0.05 % to 12.0 %.

Cr: 0.1 % to 2.5 %

Cr is a useful element for ensuring hardenability, yet such an effect is insufficient when the Cr content is less than 0.1 %. On the other hand, when the Cr content exceeds 2.5 %, weldability deteriorates. Therefore, when contained, the Cr content is in a range of 0.1 % to 2.5 %.

Nb: 0.005 % to 0.1 %

Nb has an effect of improving hardenability. Additionally, Nb forms fine precipitates of Nb-based carbonitride, which has an effect of pinning austenite grains upon heating and suppressing coarsening of grains. However, when the Nb content is less than 0.005 %, the effect is insufficient. On the other hand, when the Nb content exceeds 0.1 %, toughness of heat-affected zone deteriorates. Therefore, when contained, the Ni content is in a range of 0.005 % to 0.1 %.

W: 0.05 % to 2.0 %

W has an effect of improving hardenability, yet the effect is insufficient when the W content is less than 0.05 %. On the other hand, when the W content exceeds 2.0 %, weldability deteriorates. Therefore, when contained, the W content is in a range of 0.05 % to 2.0 %.

B: 0.0005 % to 0.005 %

B is contained to ensure hardenability, yet such an effect is insufficient when the B content is less than 0.0005 %. On the other hand, when the B content exceeds 0.005 %, toughness deteriorates. Therefore, when contained, the B content is in a range of 0.0005 % to 0.005 %.

The present dislcosure may also contain the following elements as appropriate:

at least one selected from Nd: 0.005 % to 1.0 %, Ca: 0.0005 % to 0.005 %, Mg: 0.0005 % to 0.005 %, and REM: 0.0005 % to 0.005 %

Nd: 0.005 % to 1.0 %

Nd has an effect of incorporating S as an inclusion, reducing grain boundary segregation amount of S, and improving low-temperature toughness and hydrogen embrittlement resistance. However, when the Nd content is less than 0.005 %, the effect is insufficient. On the other hand, when the Nd content exceeds 1.0 %, toughness of heat-affected zone deteriorates. Therefore, when contained, the Nd content is in a range of 0.005 % to 1.0 %.

Ca: 0.0005 % to 0.005 %

Ca has an effect of controlling the form of sulfide inclusions. Specifically, Ca forms CaS, which is a spherical inclusion difficult to be extended by rolling, on behalf of MnS, which is an inclusion easy to be extended by rolling. However, when the Ca content is less than 0.0005 %, the effect is insufficient. On the other hand, when the Ca content exceeds 0.005 %, cleanliness lowers, causing deterioration to material such as deterioration to toughness. Therefore, when contained, the Ca content is in a range of 0.0005 % to 0.005 %.

Mg: 0.0005 % to 0.005 %

Mg may be used as a hot metal desulfurization agent, yet such an effect is insufficient when the Mg content is less than 0.0005 %. On the other hand, when the Mg content exceeds 0.005 %, cleanliness lowers. Therefore, when contained, the Mg content is in a range of 0.0005 % to 0.005 %.

REM: 0.0005 % to 0.005 %

REM forms a sulfide called REM(O, S) in steel to reduce amount of solute S at grain boundaries, and thereby improves resistance to stress-relief cracking. However, when the REM content is less than 0.0005 %, such an effect is insufficient. On the other hand, when the REM content exceeds 0.005 %, a remarkable amount of REM sulfides accumulate at sedimental zone, causing deterioration to material. Therefore, when contained, the REM content is in a range of 0.0005 % to 0.005 %. Note that REM is the abbreviation for Rare Earth Metal.

The steel structure for hydrogen gas of the present disclosure is required to have a microstructure in which fine precipitates are dispersed as described above. Additionally, the steel structure for hydrogen gas preferably has a mixed microstructure of bainite and martensite or a martensite microstructure as the matrix phase.

Next, methods of producing a hydrogen line pipe and a hydrogen storage vessel, which are steel structures for hydrogen gas of the present disclosure, will be described as examples of advantageous methods of producing the steel structure for hydrogen gas of the present disclosure.

The steel structure for hydrogen gas of the present disclosure may be a steel structure for hydrogen gas using any of various steel materials such as a thin sheet, a thick plate, a pipe, a piece of shaped steel, and a steel bar as they are, or a steel structure for hydrogen gas using any of the various steel materials that has been formed into a predetermined shape. The steel materials have excellent fatigue crack propagation resistance in high pressure hydrogen gas.

The temperature specified in production conditions is the temperature at the center of the steel material. For a thin sheet, a thick plate, a pipe or a piece of shaped steel, it is the temperature at the center of sheet thickness. For a steel bar, it is the temperature at the center of diameter. However, it is not limited to the temperature at the center because any part around the center has a substantially similar temperature history with the center.

The hydrogen line pipe, which is a steel structure for hydrogen gas of the present disclosure, can be produced by, for example, subjecting a steel raw material to hot rolling to obtain a hot rolled material, and then performing accelerated cooling or direct quenching and tempering on the hot rolled material.

The steel raw material used for producing the hydrogen line pipe of the present disclosure is cast from molten steel whose chemical composition has been adjusted as described above. There is no particular limitation to casting conditions. Any steel raw material produced under any casting condition may be used. Neither methods of producing cast steel from molten steel nor methods of rolling cast steel to produce billet are particularly limited. It is acceptable to use any steel smelt by processes such as converter steelmaking process or electric steelmaking process, or any steel slab produced by processes such as continuous casting or ingot casting.

Direct quenching and tempering

The steel raw material is heated to $Ac_3$ transformation temperature or higher and hot rolled to obtain a hot rolled material, then the hot rolled material is quenched from $Ar_3$ transformation temperature or higher to 250 °C or lower at a cooling rate of 1 °C/s to 200 °C/s, and then tempered at a temperature of 600 °C or higher and $Ac_1$ transformation temperature or lower.

When the heating temperature is lower than $Ac_3$ transformation temperature, some non-transformed austenite remains. As a result, a desired steel microstructure cannot be obtained after hot rolling, quenching and tempering. Therefore, the heating temperature before hot rolling is set to $Ac_3$ transformation temperature or higher. Additionally, when the starting temperature of quenching after hot rolling is lower than $Ar_3$ transformation temperature, some austenite transforms before quenching. As a result, a desired steel microstructure cannot be obtained after quenching and tempering. Therefore, after hot rolling, quenching is performed with cooling started from $Ar_3$ transformation temperature or higher.

In order to obtain a desired microstructure, cooling rate during the quenching which starts from $Ar_3$ transformation temperature or higher is set to 1 °C/s to 200 °C/s. Note that the cooling rate is an average cooling rate at the center of sheet thickness. The method of cooling is not particularly limited and may be water cooling or the like.

Additionally, when quenching is stopped at a temperature exceeding 250 °C, a desired steel microstructure cannot be obtained after tempering because bainite transformation and martensitic transformation are not completed. Therefore, quenching continues until the temperature is 250 °C or lower.

After quenching, tempering is performed at a temperature of 600 °C or higher and $Ac_1$ transformation temperature or lower. When the tempering temperature is lower than 600 °C, desired fine precipitates cannot be obtained. On the other hand, when the tempering temperature exceeds $Ac_1$ transformation temperature, the matrix phase partially transforms into austenite. As a result, it is impossible to obtain a desired steel microstructure after tempering.

Additionally, the hydrogen storage vessel, which is a steel structure for hydrogen gas of the present disclosure, can be produced by, for example, forming a steel material having a predetermined chemical composition into a formed body with a predetermined shape, that is, forming the steel material into a formed body with the shape of a desired hydrogen storage vessel, and then performing reheating quenching and tempering on the formed body.

Reheating quenching and tempering

The steel material having the above-described chemical composition is formed into a formed body with a predetermined shape, then heated to $Ac_3$ transformation temperature or higher, then quenched from $Ar_3$ transformation temperature or higher to 250 °C or lower at a cooling rate of 0.5 °C/s to 100 °C/s, and then tempered at a temperature of 600 °C or higher and $Ac_1$ transformation temperature or lower

The steel material to be heated to $Ac_3$ transformation temperature or higher may be any steel material having the above-described chemical composition. There is no particular limitation to the steel microstructure. The steel material is formed into a formed body with a predetermined shape and then heated. When the heating temperature is lower than $Ac_3$ transformation temperature, some non-transformed austenite remains. As a result, a desired steel microstructure cannot be obtained after quenching and tempering. Therefore, the heating temperature is set to $Ac_3$ transformation temperature or higher. Additionally, when the starting temperature of quenching after heating is lower than $Ar_3$ transformation temperature, some austenite transforms before cooling. As a result, a desired steel microstructure cannot be obtained after quenching and tempering. Therefore, after heating, quenching is performed with cooling started from $Ar_3$

transformation temperature or higher.

In order to obtain a desired microstructure and to prevent quench cracking, cooling rate during the quenching which starts from $Ar_3$ transformation temperature or higher is set to 0.5 °C/s to 100 °C/s. Note that the cooling rate is an average cooling rate at the center of sheet thickness, which is the center of wall thickness of the storage vessel in this case. The method of cooling is not particularly limited and may be oil cooling, water cooling or the like.

Additionally, when the quenching, in other words, the cooling is stopped at a temperature exceeding 250 °C, a desired steel microstructure cannot be obtained after tempering because the desired transformation is not completed. Therefore, quenching continues until the temperature is 250 °C or lower.

After quenching, tempering is performed at a temperature of 600 °C or higher and $Ac_1$ transformation temperature or lower. When the tempering temperature is lower than 600 °C, desired fine precipitates cannot be obtained. On the other hand, when the tempering temperature exceeds $Ac_1$ transformation temperature, the matrix phase partially transforms into austenite. As a result, it is impossible to obtain a desired steel microstructure after tempering.

In the present disclosure, $Ac_3$ transformation temperature (°C), $Ar_3$ transformation temperature (°C) and $Ac_1$ transformation temperature (°C) are calculated according to the following formulas.

$$Ac_3 = 854 - 180C + 44Si - 14Mn - 17.8Ni - 1.7Cr$$

$$Ar_3 = 910 - 310C - 80Mn - 20Cu - 15Cr - 55Ni - 80Mo$$

$$Ac_1 = 723 - 14Mn + 22Si - 14.4Ni + 23.3Cr$$

In the above formulas, the symbol of each element refers to the content in mass% of that element in steel.

According to the above-described production conditions, it is possible to obtain a steel structure for hydrogen gas having excellent hydrogen embrittlement resistance where fine precipitates effective for trapping hydrogen are dispersed and hydrogen embrittlement resistance in high pressure hydrogen gas is improved as compared with conventional materials. Examples of the steel structure for hydrogen gas include a hydrogen line pipe and a hydrogen storage vessel.

EXAMPLES

Hereinafter, examples which verify the effects of the present disclosure will be described. In the following examples, the production method and property evaluation of the hydrogen line pipe and the hydrogen storage vessel were simulated by the production method and property evaluation of a steel sheet. Specifically, in a case where the production method of the steel sheet is direct quenching and tempering, it is the simulation of the hydrogen line pipe, and in a case where the production method of the steel sheet is reheating quenching and tempering, it is the simulation of the hydrogen storage vessel.

Steel Samples A to H having the chemical composition listed in Table 1 were smelted and cast into slabs. Subsequently, the slabs were heated to the heating temperature listed in Table 2, hot rolled, and then subjected to direct quenching and tempering treatment by water cooling under the conditions listed in Table 2 to obtain Steel Sheets No. 1 to 5.

Additionally, steel sheets were once formed after casting the steel into slabs. These steel sheets were heated and then subjected to quenching by oil cooling under the conditions listed in Table 2, and then subjected to reheating quenching and tempering to obtain Steel Sheets No. 6 to 10.

The temperature of the steel sheet was measured with a thermocouple inserted in the central part of the sheet thickness. Additionally, the cooling rate during the water cooling listed in Table 2 was in a range of 10 °C/s to 50 °C/s, and the cooling rate during the oil cooling listed in Table 2 was in a range of 1 °C/s to 50 °C/s.

Table 2 also lists the test results of tensile strength, reduction of area in the atmosphere, reduction of area in a high pressure hydrogen gas of 120 MPa, the ratio of the reduction of area in the high pressure hydrogen gas to the reduction of area in the atmosphere, and the average particle size of (V, Mo)C precipitates or (Ti, Mo)C precipitates for each obtained steel sheet.

Evaluation methods for material properties are as follows.

Tensile tests were carried out in the atmosphere and in a high pressure hydrogen gas of 120 MPa using a round bar tensile test piece where the parallel portion diameter was 5 mm and the rolling direction was in the longitudinal direction (tensile direction). The test proceeded with a constant displacement speed of $10^{-3}$ mm/s until the test piece broke. In a test carried out in the atmosphere, tensile strength and reduction of area were evaluated, and in a test carried out in the hydrogen gas, reduction of area was evaluated.

A (reduction of area in a high pressure hydrogen gas of 120 MPa / reduction of area in the atmosphere) $\times$ 100 (%) of 70 % or more is set as a goal. A steel sheet that reached the goal was evaluated as excellent in hydrogen embrittlement resistance.

The average particle size of (V, Mo)C precipitates or (Ti, Mo)C precipitates was determined as follows.

50 (V, Mo)C precipitates and 50 (Ti, Mo)C precipitates confirmed by thin film TEM-EDX analysis or extracted replica TEM-EDX analysis were imaged by TEM for measuring the particle size, which means the equivalent circle diameter, and the measurement results were averaged.

Table 1

| Steel sample ID | Chemical composition (mass%) | | | | | | | | | | | | | | | | | | | | | V/Mo (ratio of number of atoms) | Ti/Mo (ratio of number of atoms) | Ac$_3$ (°C) | Ar$_3$ (°C) | Ac$_1$ (°C) | Remarks |
|---|---|---|---|---|---|---|---|---|---|---|---|---|---|---|---|---|---|---|---|---|---|---|---|---|---|---|---|
| | C | Si | Mn | Al | N | P | S | O | Cu | Ni | Cr | Mo | Nb | V | Ti | B | Nd | W | Ca | Mg | REM | | | | | | |
| A | 0.11 | 0.26 | 1.51 | 0.025 | 0.0035 | 0.015 | 0.0018 | 0.0032 | - | - | - | 0.16 | - | 0.050 | 0.000 | - | - | - | - | - | - | 0.6 | 0.0 | 823 | 749 | 707 | Conforming steel |
| B | 0.14 | 0.32 | 1.81 | 0.026 | 0.0026 | 0.005 | 0.0025 | 0.0026 | - | - | - | 0.25 | - | 0.100 | 0.000 | - | - | - | - | - | - | 0.8 | 0.0 | 817 | 720 | 705 | Conforming steel |
| C | 0.18 | 0.31 | 0.79 | 0.028 | 0.0032 | 0.010 | 0.0016 | 0.0030 | - | - | 0.69 | 0.40 | 0.020 | 0.200 | 0.000 | 0.0011 | - | - | - | - | - | 0.9 | 0.0 | 823 | 783 | 737 | Conforming steel |
| D | 0.23 | 0.34 | 0.82 | 0.028 | 0.0038 | 0.012 | 0.0010 | 0.0031 | - | - | 0.47 | 1.10 | - | 0.300 | 0.000 | 0.0010 | - | - | - | - | - | 0.5 | 0.0 | 811 | 742 | 729 | Comparative steel |
| E | 0.25 | 0.26 | 0.73 | 0.031 | 0.0040 | 0.008 | 0.0034 | 0.0035 | - | - | 0.77 | 0.06 | 0.029 | 0.000 | 0.020 | - | - | - | - | - | - | 0.0 | 0.7 | 808 | 726 | 738 | Conforming steel |
| F | 0.31 | 0.37 | 0.95 | 0.033 | 0.0021 | 0.009 | 0.0015 | 0.0038 | - | - | 0.75 | 0.07 | 0.019 | 0.000 | 0.040 | - | - | - | - | - | - | 0.0 | 1.1 | 799 | 703 | 736 | Conforming steel |
| G | 0.35 | 0.41 | 1.31 | 0.051 | 0.0035 | 0.010 | 0.0005 | 0.0032 | 0.52 | 0.67 | 0.76 | 0.10 | 0.021 | 0.000 | 0.080 | 0.0010 | - | - | - | - | - | 0.0 | 1.6 | 792 | 656 | 728 | Conforming steel |
| H | 0.47 | 0.48 | 1.61 | 0.057 | 0.0037 | 0.016 | 0.0016 | 0.0026 | - | - | 1.51 | 0.47 | 0.024 | 0.000 | 0.100 | 0.0009 | 0.023 | 0.21 | 0.0012 | 0.0006 | 0.0005 | 0.0 | 0.4 | 769 | 586 | 741 | Comparative steel |

Note 1: Ac$_3$ (°C) = 854 − 180C + 44Si − 14Mn − 17.8Ni − 1.7Cr, where each element symbol indicates the content of this element in mass% in steel.

Note 2: Ar$_3$ (°C) = 910 − 310C − 80Mn − 20Cu − 15Cr − 55Ni − 80Mo, where each element symbol indicates the content of this element in mass% in steel.

Note 3: Ac$_1$(°C) = 723 − 14Mn + 22Si − 14.4Ni + 23.3Cr, where each element symbol indicates the content of this element in mass% in steel.

Table 2

| Steel sheet No. | Steel sample ID | Sheet thickness (mm) | Production method | Heating temperature (°C) | Start temperature of water cooling (°C) | Stop temperature of water cooling (°C) | Start temperature of oil cooling (°C) | Stop temperature of oil cooling (°C) | Tempering temperature (°C) | Average particle size of (V, Mo)C precipitates (nm) | Average particle size of (Ti, Mo)C precipitates (nm) | Tensile strength (MPa) | Reduction of area in the atmosphere (%) | Reduction of area in 120 MPa hydrogen gas (%) | Reduction of area in hydrogen gas / reduction of area in the atmosphere × 100 (%) | Remarks |
|---|---|---|---|---|---|---|---|---|---|---|---|---|---|---|---|---|
| 1 | A | 10 | Direct quenching and tempering | 1100 | 900 | 250 | - | - | 650 | 12 | - | 651 | 71 | 60 | 84.5 | Example |
| 2 | B | 25 | Direct quenching and tempering | 1100 | 900 | 250 | - | - | 650 | 7 | - | 712 | 68 | 55 | 80.9 | Example |
| 3 | C | 32 | Direct quenching and tempering | 1100 | 900 | 250 | - | - | 650 | 2 | - | 823 | 67 | 52 | 77.6 | Example |
| 4 | C | 32 | Direct quenching and tempering | 1100 | 900 | 250 | - | - | 500 | 1 | - | 941 | 65 | 42 | 64.6 | Comparative example |
| 5 | D | 12 | Direct quenching and tempering | 1100 | 900 | 250 | - | - | 650 | 18 | - | 979 | 63 | 41 | 65.1 | Comparative example |

| Steel sheet No. | Steel sample ID | Sheet thick-ness (mm) | Produc-tion method | Heating tempera-ture (°C) | Start tem-perature of water cooling (°C) | Stop temperature of water cooling (°C) | Start tem-perature of oil cool-ing (°C) | Stop tem-perature of oil cool-ing (°C) | Temper-ing tem-perature (°C) | Average particle size of (V, Mo)C precipitates (nm) | Average particle size of (Ti, Mo)C precipitates (nm) | Tensile strength a (MPa) | Reduction of area in the atmos-phere (%) | Reduc-tion of area in 120 MPa hydro-gen gas (%) | Reduc-tion of area in hy-drogen gas / re-duction of area in the atmos-phere × 100 (%) | Remarks |
|---|---|---|---|---|---|---|---|---|---|---|---|---|---|---|---|---|
| 6 | E | 10 | Reheat-ing quench-ing and temper-ing | 920 | - | - | 850 | 250 | 650 | - | 6 | 1011 | 61 | 49 | 80.3 | Example |
| 7 | F | 25 | Reheat-ing quench-ing and temper-ing | 920 | - | - | 850 | 250 | 650 | - | 2 | 1025 | 57 | 45 | 78.9 | Example |
| 8 | G | 32 | Reheat-ing quench-ing and temper-ing | 920 | - | - | 850 | 250 | 650 | - | 15 | 1052 | 55 | 42 | 76.4 | Example |
| 9 | G | 32 | Reheat-ing quench-ing and temper-ing | 920 | - | - | 850 | 250 | 500 | - | - | 1114 | 52 | 33 | 63.5 | Compara-tive exam-ple |

| Steel sheet No. | Steel sample ID | Sheet thickness (mm) | Production method | Heating temperature (°C) | Start temperature of water cooling (°C) | Stop temperature of water cooling (°C) | Start temperature of oil cooling (°C) | Stop temperature of oil cooling (°C) | Tempering temperature (°C) | Average particle size of (V, Mo)C precipitates (nm) | Average particle size of (Ti, Mo)C precipitates (nm) | Tensile strength a (MPa) | Reduction of area in the atmosphere (%) | Reduction of area in 120 MPa hydrogen gas (%) | Reduction of area in hydrogen gas / reduction of area in the atmosphere × 100 (%) | Remarks |
|---|---|---|---|---|---|---|---|---|---|---|---|---|---|---|---|---|
| 10 | H | 12 | Reheating quenching and tempering | 920 | - | - | 850 | 250 | 650 | - | 17 | 1247 | 42 | 27 | 64.3 | Comparative example |

Note: Underline indicates that it is outside the range of the present disclosure.

Steel Sheets No. 1 to 3 and 6 to 8 listed in Table 2 all satisfy the specification regarding chemical composition and production condition of the present disclosure. These steel sheets have a ratio of reduction of area in the high pressure hydrogen gas to reduction of area in the atmosphere of 70 % or more, and are considered as excellent in hydrogen embrittlement resistance in high pressure hydrogen gas.

On the other hand, Steel Sheets No. 4 and 9 have a tempering temperature lower than the lower limit of the range specified in the present disclosure, which means the tempering temperature is outside the range specified in the present disclosure. Accordingly, their ratios of reduction of area in the high pressure hydrogen gas to reduction of area in the atmosphere do not reach the goal value. Steel Sheets No. 5 and 10 have a chemical composition outside the range specified in the present disclosure. Accordingly, their ratios of reduction of area in the high pressure hydrogen gas to reduction of area in the atmosphere do not reach the goal value.

As is apparent from the above results, the examples according to the present disclosure have a small decrease in reduction of area even in high pressure hydrogen gas and are excellent in hydrogen embrittlement resistance. It is understood that a steel structure for hydrogen gas such as a hydrogen storage vessel or a hydrogen line pipe excellent in hydrogen embrittlement resistance can be obtained according to the present disclosure.

Additionally, the fine precipitates of the conforming steel in which V and Mo were added in combination were subject to thin film TEM-EDX analysis. As a result, it was found that the obtained fine precipitates were mainly (V, Mo)C where a ratio of number of V atoms to number of Mo atoms was approximately 1:1. For the conforming steel in which Ti and Mo were added in combination, it was identified that the fine precipitates were mainly (Ti, Mo)C where a ratio of number of Ti atoms to number of Mo atoms was approximately 1:1.

Steel Sheets No. 1 to 3 and 6 to 8, which are examples according to the present disclosure, all have an average particle size within the range specified in the present disclosure. On the other hand, for Steel Sheets No. 4 and 9 whose tempering temperature is lower than the lower limit of the range of the present disclosure and is outside the range of the present disclosure, (V, Mo)C fine precipitates and (Ti, Mo)C fine precipitates were hardly observed. For Steel Sheets No. 5 and 10 whose chemical composition is outside the range of the present disclosure, an average particle size within the range of the present disclosure was observed.

**Claims**

1. A steel structure for hydrogen gas with excellent hydrogen embrittlement resistance in high pressure hydrogen gas, comprising
   a steel composition containing, by mass%:

   C: 0.02 % to 0.50 %,
   Si: 0.05 % to 0.50 %,
   Mn: 0.5 % to 2.0 %,
   P: 0.05 % or less,
   S: 0.01 % or less,
   Al: 0.01 % to 0.10 %,
   N: 0.0005 % to 0.008 %,
   O: 0.01 % or less, and

   V: 0.05 % to 0.30 % and Mo: 0.05 % to 1.13 % where a ratio of number of V atoms to number of Mo atoms is in a range of 0.6 to 2.0, or
   Ti: 0.02 % to 0.12 % and Mo: 0.02 % to 0.48 % where a ratio of number of Ti atoms to number of Mo atoms is in a range of 0.5 to 2.0, and

   optionally at least one selected from (i) and (ii):

   (i) at least one selected from, by mass%:

   Cu: 0.05 % to 1.0 %,
   Ni: 0.05 % to 12.0 %,
   Cr: 0.1 % to 2.5 %,
   Nb: 0.005 % to 0.1 %,
   W: 0.05 % to 2.0 %, and
   B: 0.0005 % to 0.005 %,

(ii) at least one selected from, by mass%:

Nd: 0.005 % to 1.0%,
Ca: 0.0005 % to 0.005 %,
Mg: 0.0005 % to 0.005 %, and
REM: 0.0005 % to 0.005 %,

the balance consisting of Fe and inevitable impurities, wherein fine complex carbides of V and Mo or Ti and Mo have an average particle size of 1 nm to 20 nm.

2. The steel structure for hydrogen gas according to claim 1, wherein
   the steel structure for hydrogen gas is a hydrogen storage vessel or a hydrogen line pipe.

3. A method of producing the steel structure for hydrogen gas with excellent hydrogen embrittlement resistance in high pressure hydrogen gas according to claim 1 or claim 2, comprising
   heating a steel raw material having the steel composition according to claim 1 to $Ac_3$ transformation temperature or higher;
   then hot rolling the steel raw material to obtain a hot rolled material; then quenching the hot rolled material from $Ar_3$ transformation temperature or higher to 250 °C or lower at a cooling rate of 1 °C/s to 200 °C/s; and
   then tempering the hot rolled material at a temperature of 600 °C or higher and $Ac_1$ transformation temperature or lower to obtain a steel structure for hydrogen gas,
   wherein $Ac_3$ transformation temperature (°C), $Ar_3$ transformation temperature (°C) and $Ac_1$ transformation temperature (°C) are calculated according to the following formulas:

$$Ac_3 = 854 - 180C + 44Si - 14Mn - 17.8Ni - 1.7Cr$$

$$Ar_3 = 910 - 310C - 80Mn - 20Cu - 15Cr - 55Ni - 80Mo$$

$$Ac_1 = 723 - 14Mn + 22Si - 14.4Ni + 23.3Cr$$

(in the above formulas, the symbol of each element refers to the content in mass% of that element in steel) .

4. A method of producing the steel structure for hydrogen gas with excellent hydrogen embrittlement resistance in high pressure hydrogen gas according to claim 1 or claim 2, comprising
   forming a steel material having the steel composition according to claim 1 into a formed body with a predetermined shape;
   then heating the formed body up to $Ac_3$ transformation temperature or higher;
   then quenching the formed body from $Ar_3$ transformation temperature or higher to 250 °C or lower at a cooling rate of 0.5 °C/s to 100 °C/s; and
   then tempering the formed body at a temperature of 600 °C or higher and $Ac_1$ transformation temperature or lower to obtain a steel structure for hydrogen gas,
   wherein $Ac_3$ transformation temperature (°C), $Ar_3$ transformation temperature (°C) and $Ac_1$ transformation temperature (°C) are calculated according to the following formulas:

$$Ac_3 = 854 - 180C + 44Si - 14Mn - 17.8Ni - 1.7Cr$$

$$Ar_3 = 910 - 310C - 80Mn - 20Cu - 15Cr - 55Ni - 80Mo$$

$$Ac_1 = 723 - 14Mn + 22Si - 14.4Ni + 23.3Cr$$

(in the above formulas, the symbol of each element refers to the content in mass% of that element in steel).

**Patentansprüche**

1. Stahlstruktur für Wasserstoffgas mit hervorragender Beständigkeit gegen Wasserstoffversprödung in Hochdruckwasserstoffgas, umfassend

   eine Stahlzusammensetzung, die in Masse-% enthält:

   C: 0,02 % bis 0,50 %,
   Si: 0,05% bis 0,50%,
   Mn: 0,5 % bis 2,0 %,
   P: 0,05 % oder weniger,
   S: 0,01 % oder weniger,
   Al: 0,01 % bis 0,10 %,
   N: 0,0005% bis 0,008%,
   O: 0,01 % oder weniger, und
   V: 0,05 % bis 0,30 % und Mo: 0,05 % bis 1,13 %, wobei das Verhältnis der Anzahl der V-Atome zur Anzahl der Mo-Atome in einem Bereich von 0,6 bis 2,0 liegt, oder
   Ti: 0,02 % bis 0,12 % und Mo: 0,02 % bis 0,48 %, wobei das Verhältnis der Anzahl der Ti-Atome zur Anzahl der Mo-Atome in einem Bereich von 0,5 bis 2,0 liegt, und optional mindestens ein Element ausgewählt aus (i) und (ii) :

   (i) mindestens ein Element, in Masse-%, ausgewählt aus:

   Cu: 0,05 % bis 1,0 %,
   Ni: 0,05 % bis 12,0 %
   Cr: 0,1 % bis 2,5 %,
   Nb: 0,005 % bis 0,1 %,
   W: 0,05 % bis 2,0 %, und
   B: 0,0005 % bis 0,005 %,

   (ii) mindestens ein Element, in Masse-%, ausgewählt aus:

   Nd: 0,005 % bis 1,0 %,
   Ca: 0,0005 % bis 0,005 %,
   Mg: 0,0005 % bis 0,005 %, und
   REM: 0,0005 % bis 0,005 %,

   wobei der Rest aus Fe und unvermeidlichen Verunreinigungen besteht, wobei feine Komplexkarbide aus V und Mo oder Ti und Mo eine durchschnittliche Teilchengröße von 1 nm bis 20 nm aufweisen.

2. Stahlstruktur für Wasserstoffgas nach Anspruch 1, wobei die Stahlstruktur für Wasserstoffgas ein Wasserstoffspeicherbehälter oder ein Wasserstoffleitungsrohr ist.

3. Verfahren zur Herstellung der Stahlstruktur für Wasserstoffgas mit hervorragender Beständigkeit gegen Wasserstoffversprödung in Hochdruckwasserstoffgas nach Anspruch 1 oder Anspruch 2, umfassend Erhitzen eines Stahlrohrmaterials mit der Stahlzusammensetzung nach Anspruch 1 auf die $Ac_3$-Umwandlungstemperatur oder höher; dann Warmwalzen des Stahlrohstoffs, um ein warmgewalztes Material zu erhalten; dann Abschrecken des warmgewalzten Materials von der $Ar_3$-Umwandlungstemperatur oder höher auf 250 °C oder niedriger mit einer Abkühlgeschwindigkeit von 1 °C/s bis 200 °C/s; und anschließendes Tempern des warmgewalzten Materials bei einer Temperatur von 600 °C oder höher und $Ac_1$-Umwandlungstemperatur oder niedriger, um eine Stahlstruktur für Wasserstoffgas zu erhalten, wobei die $Ac_3$-Umwandlungstemperatur (°C), die $Ar_3$-Umwandlungstemperatur (°C) und die $Ac_1$-Umwandlungstemperatur (°C) nach den folgenden Formeln berechnet werden:

$$Ac_3 = 854 - 180C + 44Si - 14Mn - 17,8Ni - 1,7Cr$$

$$Ar_3 = 910 - 310C - 80Mn - 20Cu - 15Cr - 55Ni - 80Mo$$

$$Ac_1 = 723 - 14Mn + 22Si - 14,4Ni + 23,3Cr$$

(in den obigen Formeln bezieht sich das Symbol jedes Elementes auf den Gehalt in Masse-% des jeweiligen Elementes in Stahl).

**4.** Verfahren zur Herstellung der Stahlstruktur für Wasserstoffgas mit hervorragender Beständigkeit gegen Wasserstoffversprödung in Hochdruckwasserstoffgas nach Anspruch 1 oder Anspruch 2, umfassend Formen eines Stahlmaterials mit der Stahlzusammensetzung nach Anspruch 1 zu einem Formkörper mit einer vorbestimmten Form;
dann Erwärmung des Formkörpers bis zur Ac$_3$-Umwandlungstemperatur oder höher;
dann Abschrecken des Formkörpers von der Ar$_3$-Umwandlungstemperatur oder höher auf 250 °C oder niedriger mit einer Abkühlgeschwindigkeit von 0,5 °C/s bis 100 °C/s; und
anschließendes Tempern des Formkörpers bei einer Temperatur von 600 °C oder höher und Ac$_1$-Umwandlungstemperatur oder niedriger, um eine Stahlstruktur für Wasserstoffgas zu erhalten,
wobei die Ac$_3$-Umwandlungstemperatur (°C), die Ar$_3$-Umwandlungstemperatur (°C) und die Ac$_1$-Umwandlungstemperatur (°C) nach den folgenden Formeln berechnet werden:

$$Ac_3 = 854 - 180C + 44Si - 14Mn - 17,8Ni - 1,7Cr$$

$$Ar_3 = 910 - 310C - 80Mn - 20Cu - 15Cr - 55Ni - 80Mo$$

$$Ac_1 = 723 - 14Mn + 22Si - 14,4Ni + 23,3Cr$$

(in den obigen Formeln bezieht sich das Symbol jedes Elementes auf den Gehalt in Masse-% des jeweiligen Elementes in Stahl).

**Revendications**

**1.** Structure d'acier pour de l'hydrogène gazeux ayant une excellente résistance à la fragilisation par l'hydrogène dans de l'hydrogène gazeux haute pression, comprenant
une composition d'acier contenant, en % en masse :

C : de 0,02 % à 0,50 %,
Si : de 0,05 % à 0,50 %,
Mn : de 0,5 % à 2,0 %,
P : de 0,05 % ou moins,
S : de 0,01 % ou moins,
Al : de 0,01 % à 0,10 %,
N : de 0,0005 % à 0,008 %,
O : de 0,01 % ou moins, et

V : de 0,05 % à 0,30 % et Mo : de 0,05 % à 1, 13 %, où un rapport du nombre d'atomes de V sur le nombre d'atomes de Mo est compris entre 0,6 et 2,0, ou
Ti : de 0,02 % à 0,12 % et Mo : de 0,02 % à 0,48 %, où un rapport du nombre d'atomes de Ti sur le nombre d'atomes de Mo est dans une plage de 0,5 à 2,0, et

facultativement au moins un choisi parmi (i) et (ii) :

(i) au moins un choisi parmi, en % en masse :

Cu : de 0,05 à 1,0 %,
Ni : de 0,05 % à 12,0 %,
Cr : de 0,1 % à 2,5 %,
Nb : de 0,005 % à 0,1 %,

W : de 0,05 % à 2,0 %, et
B : de 0,0005 % à 0,005 %,

(ii) au moins un choisi parmi, en % en masse :

Nd : de 0,005 à 1,0 %,
Ca : de 0,0005 % à 0,005 %,
Mg : de 0,0005 % à 0,005 %, et
REM : de 0,0005 % à 0,005 %,

l'équilibre étant constitué de Fe et d'impuretés inévitables, dans laquelle des carbures complexes fins de V et Mo ou de Ti et Mo ont une granulométrie moyenne de 1 nm à 20 nm.

**2.** Structure d'acier pour de l'hydrogène gazeux selon la revendication 1, dans laquelle la structure d'acier pour de l'hydrogène gazeux est une cuve de stockage d'hydrogène ou une conduite de canalisation d'hydrogène.

**3.** Procédé de production de la structure d'acier pour de l'hydrogène gazeux ayant une excellente résistance à la fragilisation par l'hydrogène dans de l'hydrogène gazeux haute pression selon la revendication 1 ou la revendication 2, comprenant les étapes consistant à
chauffer une matière première d'acier ayant la composition d'acier selon la revendication 1 à une température de transformation $Ac_3$ ou plus ;
puis laminer à chaud la matière première d'acier pour obtenir un matériau laminé à chaud ;
puis tremper le matériau laminé à chaud de la température de transformation $Ar_3$ ou plus jusqu'à 250°C ou moins à une vitesse de refroidissement de 1°C/s à 200°C/s ;
puis effectuer un traitement de revenu du matériau laminé à chaud à une température de 600°C ou plus et une température de transformation $Ac_1$ ou moins pour obtenir une structure d'acier pour de l'hydrogène gazeux,
où la température de transformation $Ac_3$ (° C), la température de transformation $Ar_3$ (° C) et la température de transformation $Ac_1$ (° C) sont calculées selon les formules suivantes :

$$Ac_3 = 854 - 180C + 44Si - 14Mn - 17,8Ni - 1,7Cr$$

$$Ar_3 = 910 - 310C - 80Mn - 20Cu - 15Cr - 55Ni - 80Mo$$

$$Ac_1 = 723 - 14Mn + 22Si - 14,4Ni + 23,3Cr$$

(dans les formules ci-dessus, le symbole de chaque élément fait référence à la teneur en % en masse de cet élément en acier).

**4.** Procédé de production de la structure d'acier pour de l'hydrogène gazeux avec une excellente résistance à la fragilisation par l'hydrogène dans de l'hydrogène gazeux haute pression selon la revendication 1 ou la revendication 2, comprenant les étapes consistant à
former un matériau d'acier ayant la composition d'acier selon la revendication 1 en un corps formé avec une forme prédéterminée ;
puis chauffer le corps formé jusqu'à la température de transformation $Ac_3$ ou plus ;
puis tremper le corps formé de la température de transformation $Ar_3$ ou plus jusqu'à 250°C ou moins à une vitesse de refroidissement de 0,5°C/s à 100°C/s ; et
puis effectuer un traitement de revenu du corps formé à une température de 600°C ou plus et une température de transformation $Ac_1$ ou moins pour obtenir une structure d'acier pour de l'hydrogène gazeux,
où la température de transformation $Ac_3$ (°C), la température de transformation $Ar_3$ (°C) et la température de transformation $Ac_1$ (°C) sont calculées selon les formules suivantes :

$$Ac_3 = 854 - 180C + 44Si - 14Mn - 17,8Ni - 1,7Cr$$

$$Ar_3 = 910 - 310C - 80Mn - 20Cu - 15Cr - 55Ni - 80Mo$$

$$Ac_1 = 723 - 14Mn + 22Si - 14,4Ni + 23,3Cr$$

(dans les formules ci-dessus, le symbole de chaque élément fait référence à la teneur en % en masse de cet élément en acier).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005002386 A
- JP 2009046737 A
- JP 2009275249 A
- JP 2009074122 A
- JP 2010037655 A

- JP 2012107332 A
- JP 2012107333 A
- US 4354882 A
- US 2010212785 A1

**Non-patent literature cited in the description**

- **YORU WADA.** *Journal of the Hydrogen Energy Systems Society of Japan,* 2010, vol. 35 (4), 38-44

- **TAISUKE MIYAMOTO et al.** *Transactions of The Japan Society of Mechanical Engineers (Series A),* 2012, vol. 78 (788), 531-546